# EUROPÄISCHE PATENTANMELDUNG

(11) **EP 0 814 208 A2**
(43) Veröffentlichungstag der Anmeldung: **29.12.1997**
(21) Anmeldenummer: 97109717.5
(22) Anmeldetag: 14.06.1997
(51) Int. Cl.: E03C 1/01, F16L 43/00

(54) **Rohrbogen für eine Entsorgungsleitung**

(30) Priorität: 19.06.1996 DE 19624423
(71) Anmelder: Adolf Würth GmbH & Co. KG, 74653 Künzelsau (DE)
(72) Erfinder: Hoffmann, Thomas, 74653 Künzelsau (DE)
(74) Vertreter: Brose, Manfred, Dr.

(57) **Zusammenfassung**

Zum Anschluß einer Entsorgungsleitung an eine Sanitäreinheit, wie Toilette, Waschbecken, Bidet, Urinal od.dgl., insbesondere für einen Installationsbaustein (2) oder eine Metallständerwand (3) zur Vorwandmontage, wird ein Rohrbogen (1) benötigt. Zur schwenkbaren Festlegung dieses Rohrbogens (1) ist an seinem äußeren Umfang und parallel zur Zulaufmuffe (12) ein teilkreisbogenförmiger Flansch (13) mit einem teilkreisbogenförmigen Langloch (14) für eine Festlegungsschraube angeordnet.

## Beschreibung

Die Erfindung betrifft einen Rohrbogen für eine Entsorgungsleitung nach dem Oberbegriff des Anspruchs 1.

In der DE 33 09 460 A1 (Sanbloc) ist die Montage eines gattungsgemäßen Rohrbogens in einem Instaltationsbaustein beschrieben. Zur Montage wird eine aus zwei Halbbögen bestehende Befestigungsschelle verwandt, die den Rohrbogen umgreift. Beide Halbbögen sind an einem Ende mit einem Schwenkgelenk verbunden, während die anderen Enden der Halbbögen mit einer senkrechten Klemmschraube gegeneinander verschraubt und dabei an den Rohrbogen angepreßt werden. Auf dem oberen Halbbogen der Rohrschelle ist außerdem eine Lasche befestigt, durch die hindurch eine Schraube verläuft, mit der die Schelte am Installationsbaustein festgelegt wird. Diese Montageart ist sowohl kosten- als auch montagezeitaufwendig. Die Befestigungsschelle ist ein Metallteil, daß bei der Herstellung des Installationsbausteins separat manuell montiert werden muß und somit einen Material- und Personalkostenfaktor darstellt. Das Gleiche gilt später beim Einbau des Installationsbausteins, wo auch zwei Schrauben gelöst und wieder angezogen werden müssen.

Der Erfindung liegt daher die Aufgabe zugrunde, für den gattungsgemäßen Rohrbogen eine Kosten- und Montagezeit sparende Montagemöglichkeit zu schaffen.

Diese Aufgabe wird nach der Erfindung dadurch gelöst, daß der gattungsgemäße Rohrbogen auch nach dem Kennzeichnungsteil des Anspruchs 1 ausgelegt ist.

In dem Unteranspruch wird eine Fortbildung der Erfindung beansprucht.

In den Zeichnungen ist ein Ausführungsbeispiel der Erfindung wiedergegeben. Es zeigen :

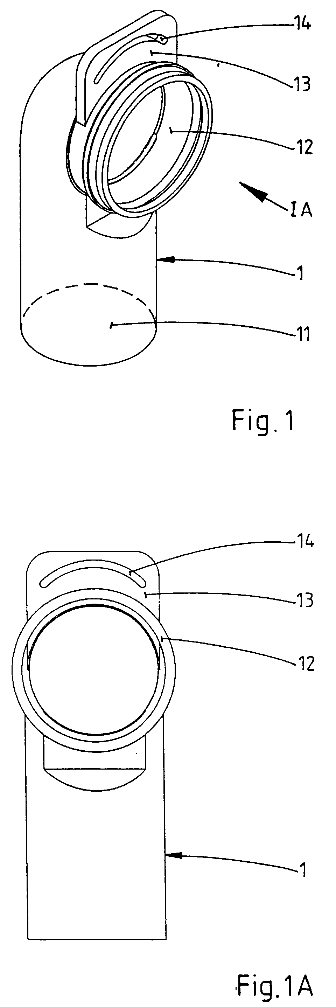

- Fig. 1: eine perspektivische Ansicht des Rohrbogens,
- Fig. 1A: eine Ansicht des Rohrbogens aus Richtung des Pfeiles I A von Figur 1,
- Fig. 2: eine perspektivische Ansicht eines Installationsbausteines mit dem zu installierenden Rohrbogen und
- Fig. 3: eine perspektivische Ansicht einer Metallständerwand mit dem zu installierenden Rohrbogen.

Der Rohrbogen 1 dient zum Anschluß einer nicht dargestellten Entsorgungsleitung an eine gleichfalls nicht dargestellten Sanitäreinheit, wie Toilette, Waschbecken, Bidet, Urinal, od.dgl.. Dieser Anschluß erfolgt in der Weise, daß in der Rohbauphase die Entsorgungsleitung mit einer Muffe über die Ablauföffnung 11 geschoben wird, während in der späteren Ausbauphase die Abgangsleitung der Sanitäreinheit in die Zulaufmuffe 12 hineingesteckt wird. Besonders der letzte Arbeitsvorgang ist mit einem beträchtlichen Druck in Richtung des Pfeiles I A auf die Muffe 12 verbunden, sodaß diese festgelegt sein muß. Zur Festlegung des Rohrbogens 1 ist an seinem äußeren Umfang und parallel zur Zulaufmuffe 12 ein teilkreisbogenförmiger Flansch 13 angeordnet.

Da die Abgangsrichtung der Entsorgungsleitung von Fall zu Fall verschieden ist - sie kann senkrecht nach unten oder auch schräg nach rechts oder links fallend abgehen - muß der Rohrbogen 1 schwenkbar gelagert sein. Daher ist in dem Flansch 13 ein teilkreisbogenförmiges Langloch 14 vorgesehen, durch das hindurch eine Festlegungsschraube den Rohrbogen 1 an einer Unterlage festlegt.

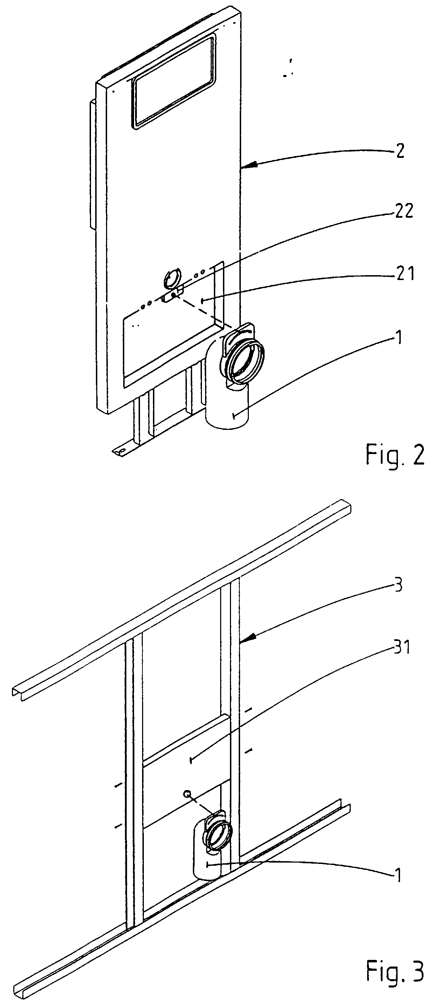

Figur 2 zeigt einen Installationsbaustein 2 und einen Rohrbogen 1 in auseinandergezogener perspektivischer Darstellung. In eine Montageöffnung 21 ragt eine Lasche 22 hinein, in die die Festlegungsschraube für den Rohrbogen 1 einschraubbar ist.

Einen ähnlichen Aufbau zeigt die in Figur 3 wiedergegebene Metallständerwand 3 mit einer Montageplatte 31, an der der Rohrbogen 1 mit einer Festlegungsschraube anschraubbar ist.

### Bezugszeichenliste

- 1: Rohrbogen
- 11: Ablauföffnung
- 12: Zulaufmuffe
- 13: Flansch
- 14: Langloch
- 2: Installationsbaustein
- 21: Montageöffnung
- 22: Lasche
- 3: Metallständerwand
- 31: Montageplatte

## Patentansprüche

1. Rohrbogen zum Anschluß einer Entsorgungsleitung an eine Sanitäreinheit, wie Toilette, Waschbecken, Bidet, Urinal od. dgl., insbesondere für einen Installationsbaustein oder eine Metallständerwand zur Vorwandmontage, dadurch gekennzeichnet, daß zur schwenkbaren Festlegung des Rohrbogens (1) an seinem äußeren Umfang und parallel zur Ebene der Zulaufmuffe (12) ein teilkreisförmiger Flansch (13) mit einem teilkreisförmigen Langloch (14) für eine Festlegungsschraube angeordnet ist.

2. Rohrbogen nach Anspruch 1, dadurch gekennzeichnet, daß der Rohrbogen (1) und der Flansch (13) einstückig ausgebildet sind
